# EUROPEAN PATENT APPLICATION

(11) **EP 3 453 785 A1**
(43) Date of publication of application: **13.03.2019**
(21) Application number: 18159132.2
(22) Date of filing: 28.02.2018
(51) Int. Cl.: C25B 1/10, C25B 9/10, H01M 4/86, H01M 4/90

(54) **MEMBRANE ELECTRODE ASSEMBLY, ELECTROCHEMICAL CELL, AND ELECTROCHEMICAL DEVICE**

(30) Priority: 07.09.2017 JP 2017172248
(71) Applicant: KABUSHIKI KAISHA TOSHIBA, Minato-ku Tokyo 105-8001 (JP)
(72) Inventor: Yoshinaga, Norihiro, Tokyo, 105-8001 (JP); Iida, Atsuko, Tokyo, 105-8001 (JP); Mei, Wu, Tokyo, 105-8001 (JP); Nakano, Yoshihiko, Tokyo, 105-8001 (JP)
(74) Representative: Hoffmann Eitle

(57) **Abstract**

A membrane electrode assembly includes a pair of electrodes, each having a feeder layer that is porous and made of a conductive material, and an electrolyte membrane disposed between the pair of electrodes. At least one of the electrodes has a catalyst layer disposed in the feeder layer. In a cross section of the feeder layer, an electrolyte exists in a first region less than or equal to 80% of a thickness of the feeder layer from the electrolyte membrane toward an opposite direction to the electrolyte membrane, the catalyst layer exists at 50% or more of an outer circumference of a cross section of the conductive material in the first region, and the catalyst layer exists at 10% or less of the outer circumference of the cross section of the conductive material in a second region other than the first region.

## Description

### CROSS-REFERENCE TO RELATED APPLICATIONS

This application is based upon and claims the benefit of priority from Japanese Patent Application No. 2017-172248, filed on September 07, 2017, and the entire contents of which are incorporated herein by reference.

### FIELD

Embodiments relate to a membrane electrode assembly, an electrochemical cell, and an electrochemical device.

### BACKGROUND

In recent years, studies on electrochemical cells have been actively conducted.

Among electrochemical cells, for example, a hydrogen production device includes a system that causes an oxidation reaction at an anode to electrolyze water and causes a reduction reaction at a cathode to generate hydrogen gas.

In addition, among the electrochemical cells, for example, a fuel cell includes a system that has an electrochemical reaction of fuel such as hydrogen with an oxidizing agent such as oxygen to generate electricity.

Among the fuel cells, a polymer electrolyte membrane fuel cell (PEFC) has been put into practical use as a household stationary power source and a car power source because of low environmental load.

In the electrochemical cell, a feeder and an electrolyte membrane included in the electrode of the electrochemical cell are peeled off due to the gas and the like generated by the electrochemical reaction. Therefore, the feeder is deeply inserted into the electrolyte membrane to prevent the feeder and the electrolyte membrane from being peeled off.

However, in the case of an electrochemical cell using an alternating catalyst layer structure (ACLS) catalyst having a unique laminated structure including an aggregate layer and a void layer which the present inventors are studying, it can be appreciated that an overvoltage of the electrochemical cell is increased if the feeder is too deeply inserted into the electrolyte membrane.

### BRIEF DESCRIPTION OF THE DRAWINGS

Fig. 1 is a schematic configuration diagram of a membrane electrode assembly according to an embodiment.
Fig. 2 is an enlarged cross-sectional view of a feeder according to an embodiment.
Fig. 3 is a schematic configuration diagram of an electrochemical cell according to an embodiment.
Fig. 4 is a schematic configuration diagram of an electrochemical device.

### DETAILED DESCRIPTION

Hereinafter, embodiments will be described with reference to the drawings. Like reference numerals designate like components. Further, drawings are schematically or conceptually shown, the relationship between thicknesses and widths of the respective portions, the ratio coefficient of dimensions between the parts and the like are not necessarily the same as the actual ones. In addition, even in the case of representing the same portion, the dimensions or ratio coefficients of the parts may be differently shown on the drawings.

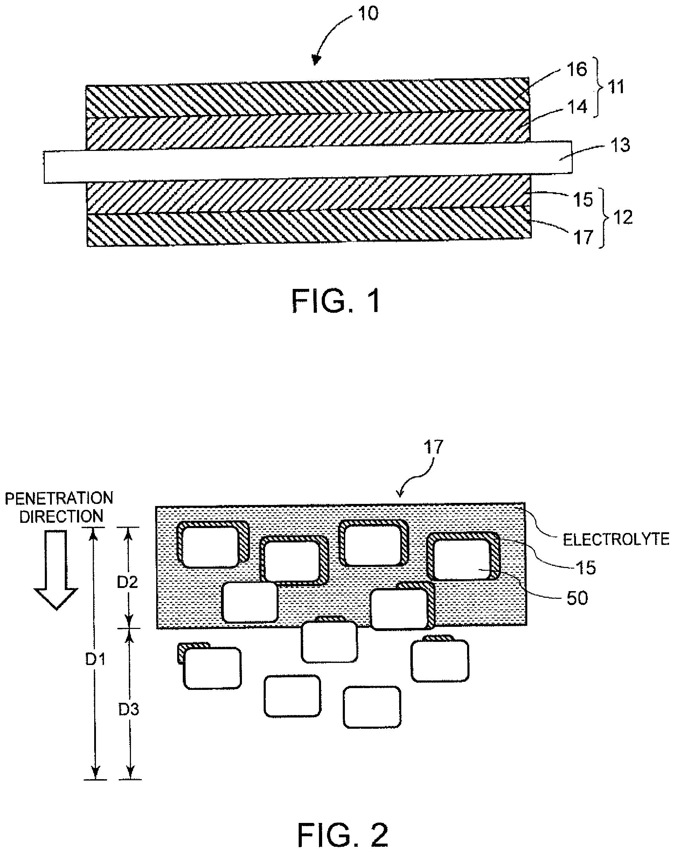

Fig. 1 shows a membrane electrode assembly (Hereinafter, referred to as "MEA") 10.

The MEA 10 includes a pair of electrodes 11 and 12 disposed facing each other and an electrolyte membrane 13 disposed between the electrodes 11 and 12.

The MEA 10 is used, for example, in an electrochemical cell of a hydrogen production device. The hydrogen production device is a device for producing hydrogen gas by an electrolysis reaction of water using the MEA 10. In the hydrogen production device, water is supplied to an anode of the MEA 10 and oxygen is generated at the anode according to the electrolysis reaction of water. In addition, hydrogen is generated at a cathode of the MEA 10 according to the electrolysis reaction of water at the anode.

The MEA 10 will be described taking the electrolysis reaction of water of the hydrogen production device as an example.

### <Electrode>

The pair of electrodes 11 and 12 is disposed facing each other. The electrode 11 includes a feeder layer 16 (power supply body) and a catalyst layer 14. The catalyst layer 14 is located between the feeder layer 16 and the electrolyte membrane 13. The electrode 12 includes a feeder layer 17 and a catalyst layer 15. The catalyst layer 15 is located between the feeder layer 17 and the electrolyte membrane 13.

If the MEA 10 is used for the electrolysis reaction of water, for example, the electrode 11 is provided as a cathode and the electrode 12 is provided as an anode. The anode decomposes water by an oxidation reaction to generate hydrogen ions and oxygen. The cathode generates hydrogen by a reduction reaction. Hereinafter, the electrode 11 will be described as the cathode and the electrode 12 will be described as the anode.

### <Electrolyte Membrane>

The electrolyte membrane 13 is disposed between the pair of electrodes 11 and 12.

The electrolyte membrane 13 contains, for example, an electrolyte having cation exchange property. The electrolyte membrane 13 serves to conduct hydrogen ions, which are generated at the electrode 12 and derived from water, to the electrode 11. As the electrolyte having the cation exchange property, for example, a fluororesin (for example, Nafion (registered trademark) (manufactured by DuPont Co.) having a sulfonate group, Flemion (registered trademark) (manufactured by Asahi Kasei Corporation), and Ashiburekku (registered trademark) (manufactured by Asahi Glass Co., Ltd)) or a hydrocarbon-based film and the like, or inorganic matters such as tungstic acid or phosphotungstic acid can be used.

In addition, the electrolyte membrane 13 includes, for example, an electrolyte having anion exchange property. Examples of the electrolyte having the anion exchange property may include A201 (manufactured by Tokuyama Corporation) and the like.

A thickness of the electrolyte membrane 13 is appropriately determined in consideration of characteristics of the MEA 10. From the viewpoints of strength, solubility resistance, and output characteristics of the MEA 10, the thickness of the electrolyte membrane 13 is preferably 5 µm or more and 300 µm or less, more preferably, 5 µm or more and 200 µm or less.

### <Feeder Layer>

The feeder layers 16 and 17 are made of a conductive material. The feeder layers 16 and 17 are porous. The feeder layers 16 and 17 are required to have sufficient gas diffusibility and conductivity.

As the conductive material of the feeder layer 17 contained in the electrode 12 as the anode, titanium (Ti) can be used for securing durability. As the Ti of the feeder layer 17, mesh produced by expanded metal or etching, metal non-woven fabric in which metal fibers are intertwined, foamed metal, sintered metal and the like can be used.

Examples of other conductive materials used for the feeder layer 17 may include metal elements such as tantalum (Ta), nickel (Ni), and platinum (Pt), alloys thereof, or stainless steel (SUS). These conductive materials may be selectively used depending on a reaction potential of the anode in an electrochemical cell to be described later. In addition, the conductive material of the feeder layer 17 can be confirmed based on a pH-potential diagram and the like. For example, in the case of the feeder of the anode used for the production of sodium hydroxide, Ni or SUS are eluted and therefore cannot be used. Therefore, it is preferable to use Ti as the conductive material of the feeder layer 17.

Examples of the feeder layer 16 included in the electrode 11 as the cathode may include metal materials such as Ta, Ti, SUS, Ni, and platinum (Pt) or carbon paper, carbon cloth, metal felt, and metal non-woven fabric and the like in which metal fiber are intertwined.

The feeder layers 16 and 17 are porous, such that gas or liquid passes through. When considering the movement of the material, the porosity of the feeder layers 16, 17 may preferably be 20% or more and 95% or less, more preferably 40% or more and 90% or less. For example, when the feeder layers 16 and 17 are the metal non-woven fabric in which the metal fibers are intertwined, a fiber diameter is preferably 1 µm or more and 500 µm or less and when considering reactivity and feeding property, the fiber diameter is more preferably 1 µm or more and 100 µm or less. When the feeder layers 16 and 17 are a particle sintered body, a particle diameter is preferably 1 µm or more and 500 µm or less and when considering the reactivity and the feeding property, the particle diameter is preferably 1 µm or more and 100 µm or less.

In the case of PEFC, the feeder layers 16 and 17 preferably contain a water repellent agent. For example, the water repellent agent enhances the water repellency of the feeder layers 16 and 17 and prevents a flooding phenomenon from occurring. Examples of the water repellent agent may include fluorine-based polymer materials such as polytetrafluoroethylene (PTFE), polyvinylidene fluoride (PVDF), polyhexafluoropropylene, tetrafluoroethylene-hexafluoropropylene copolymer (FEP) and the like. In the case of the PEFC, generally, water repellency (weight percentage of a water repellent agent in a gas diffusion layer) is preferably 2 wt% or more and 30 wt% or less. It should be noted that it is possible to improve properties of the PEFC by providing a microporous layer between the feeder layers 16 and 17 and the catalyst layers 14 and 15, and a thickness of the microporous layer is preferably 1 µm or more and 50 um or less, more preferably 2 µm or more and 30 µm or less. In addition, it is possible to improve the characteristics or the robustness of the PEFC by adjusting the porosity and the water repellency or the hydrophilic property (weight percentage of the water repellent agent or the hydrophilic agent in the microporous layer) of the microporous layer. The hydrophilic agent may preferably be a hydrophilic material. Examples of the hydrophilic agent may include organic matters having a hydrophilic group or ceramic materials such as SiO₂, Al₂O₃, TiO₂ and the like.

### <Catalyst Layer>

The catalyst layers 14 and 15 exist on the surface of the conductive material of the feeder layers 16 and 17.

The catalyst layers 14 and 15 contain a catalyst material. The catalyst material of the catalyst layers 14 and 15 are selectively used according to the reaction of the electrodes 11 and 12.

As the catalyst material of the catalyst layer 15 of the electrode 12 as the anode, iridium oxide is mostly used because of its excellent water electrolysis performance and durability. In addition, precious metal catalysts such as Pt and palladium (Pd) or lead oxide, ruthenium oxide and iridium composite oxide, ruthenium composite oxide, other oxide catalysts and the like may be used in the catalyst layer 15. Examples of composite metals forming oxides such as the iridium composite oxide and the ruthenium composite oxide may include at least any one kind selected from the group consisting of Ti, niobium (Nb), vanadium (V), chromium (Cr), manganese (Mn), cobalt (Co), lead (Zn), zirconium (Zr), molybdenum (Mo), Ta, tungsten (W), thallium (Tl), ruthenium (Ru), and iridium (Ir).

The catalyst material of the catalyst layer 14 of the electrode 11 as the cathode is preferably Ag, Pd, Pt or the like. In addition, a metal catalyst, a nitrogen-substituted carbon catalyst, an oxide catalyst, carbon and the like may be used in the catalyst layer 14.

When the electrode 12 is used for an anode of a fuel cell that performs electrolytic hydrogen generation, hydrogen oxidation / methanol oxidation and the like, a catalyst containing platinum such as Pt, PtCo, PtFe, PtNi, PtPd, PtIr, PtRu, and PtSn is preferably used for the catalyst layer 15.

When the electrode 11 as the cathode is used for the fuel cell or the oxygen reduction oxidation reaction of the oxygen-reducing element, the catalyst containing platinum such as Pt, PtCo, PtFe, PtNi, PtPd, PtIr, PtRu, and PtSn is preferably used for the catalyst layer 14. In addition, the metal catalyst, a nitrogen-substituted carbon catalyst, an oxide catalyst and the like may be used for the catalyst layer 14.

The catalyst layer 15 of the electrode 12 as the anode is a catalyst including an alternating catalyst layer structure (ACLS) catalyst having a laminated structure of aggregate layers and void layers. The catalyst layer 15 includes the laminated structure, such that the durability and surface area of the catalyst layer itself can be improved.

In the laminated structure of the catalyst layer 15, the plurality of aggregate layers and void layers are alternately laminated. An average thickness of the aggregate layer is 4 nm or more and 50 nm or less. An average thickness of the void layer is 10 nm or more and 100 nm or less.

The catalyst layer 15 preferably has a porous structure including a large number of voids therein. The shape of the void is not particularly limited. Since there are voids inside the catalyst layer 15, a material is smoothly transported, such that the water electrolysis characteristics and the like are improved.

The laminated structure of the catalyst layer 15 is produced by alternately laminating a mixed layer of a catalyst material and a pore-forming material and a pore-forming material layer by sputtering. After that, the pore-forming material contained in the mixed layer and the pore-forming material layer are dissolved to be removed. By doing so, the catalyst layer 15 having the laminated structure in which the aggregate layer and the void layer are alternately laminated is produced.

Since the inside of the catalyst layer 15 is partially bonded and the whole catalyst layer is substantially constrained by the feeder, the laminated structure of the catalyst layer is very stable against a stress applied at the time of press or gas generation.

The catalyst layer 15 of the electrode 12 as the anode preferably has the laminated structure, and the method for producing the catalyst layer 14 of the other electrode 11 as the cathode is not particularly limited. The catalyst layer 14 of the electrode 11 as the cathode, not including the laminated structure, may be produced on the feeder layer 16 by a sputtering and may be produced by directly coating a suspension, in which the catalyst powder is dispersed with water, alcohol and the like, on the feeder layer 16. In addition, a coating method such as electrolytic plating or thermal decomposition coating may also be used. It should be noted that when the feeder layer 16 itself serves as a catalyst, since the feeder layer 16 itself can form the cathode, the catalyst layer is not required for the electrode. An example of the material forming the feeder may include a platinum-based precious metal catalyst such as Pt.

### <Membrane Electrode Assembly (MEA)>

The MEA 10 includes the pair of electrodes 11 and 12 disposed facing each other and the electrolyte membrane 13 disposed between the electrodes 11 and 12.

Here, Fig. 2 is an enlarged view of a cross section of the feeder layer 17 of the electrode 12 as the anode.

An upper portion of Fig. 2 is a portion where the electrolyte membrane 13 of the feeder layer 17 exists. The feeder layer 17 has a conductive material 50 and a void portion existing between the plurality of conductive materials 50. The catalyst layer 15 is formed on a surface of the conductive material 50. From the upper portion of Fig. 2, the electrolyte exists inside the feeder layer 17.

When observing the cross section of the feeder layer 17, it is preferable that the electrolyte exists in a first region (D2) which is less than or equal to 80% of the thickness (D1) of the feeder layer 17, from the electrolyte membrane 13 toward the opposite direction to the electrolyte membrane 13. In addition, it is preferable that the catalyst layer 15 exists in 50% or more of an outer circumference of the cross section of the conductive material 50 in the first region.

In addition, here, a region other than the first region is defined as a second region (D3). It is preferable that the catalyst layer 15 exists in 10% or less of the outer circumference of the cross section of the conductive material 50 in the second region.

Since the electrolyte exists inside the feeder layer 17 within the above-mentioned range, the electrolyte and the conductive material 50 adequately contact each other, and the electrolyte is fixed to the inside of the feeder layer 17. In addition, since the electrolyte exists inside the feeder layer 17 within the above-mentioned range, a contact interface between the catalyst layer 15 and the electrolyte is increased and the reaction area is increased, such that a contact resistance can be reduced. In addition, for example, in the electrolysis reaction of water, the electrolyte exists in the first region which is less than or equal to 80% of the thickness of the feeder layer 17, and therefore the oxygen generated by the oxidation reaction in the electrode 12 as the anode is discharged from the inside of the feeder layer 17 without interfering with the electrolyte. Therefore, even when the ACLS catalyst is used for the catalyst layer 15, it is possible to suppress the overvoltage of the MEA 10 from increasing.

Here, in order to confirm the electrolyte or the catalyst layer 15 existing inside the feeder layer 17, the cross section of the feeder layer 17 is observed by scanning electron microscopy (SEM), and energy dispersive X-ray spectroscopy (EDX) mapping or line analysis is performed.

The surface of the cross section of the conductive material 50 is a position in which the main constituent element of the conductive material 50 becomes 5% or less of all the detection elements. A surface region of the cross section of the conductive material 50 is a region from the position in which the main constituent element of the conductive material 50 becomes 5% or less of all the detection elements to a position in which the count number of the main constituent element of the catalyst layer becomes 1/10 as compared with its maximum point, in a direction away from the conductive material 50. However, the surface region of the cross section of the conductive material 50 is at most 5 um from the position in which the main constituent element of the conductive material 50 becomes 5% or less of all the direction elements, toward outside of the cross section of the conductive material 50.

A ratio (X) of an outer circumference where the catalyst layer 15 exists in the outer circumference of the cross section of the conductive material 50 in the first region (D2) in which the electrolyte exists inside the feeder layer 17, can be obtained by dividing the outer circumference (Xa) where the catalyst layer 15 exists in the surface of the cross section of the conductive material 50 in the first region by the sum of the outer circumference (Xb) where the catalyst layer 15 does not exist in the surface of the cross section of the conductive material 50 in the first region and the outer circumference (Xa) where the catalyst layer 15 exists in the surface of the cross section of the conductive material 50 in the first region. (X= Xa/(Xa+Xb)) The ratio (X) is referred as the existence ratio (%) of catalyst layer on surface of cross section of conductive material in region in which electrolyte exists.

The occupancy (existence ratio) (Y) of the electrolyte inside the feeder layer 17 is obtained by the EDX mapping. In the region where the conductive material 50 in the feeder layer 17 is removed, the region in which an existence ratio of fluorine or sulfur is 1/10 or less of the electrolyte is calculated by the EDX mapping, which is referred to as the region in which the electrolyte exists (Ya). The occupancy (Y) of the electrolyte inside the feeder layer 17 is obtained by, in a cross section, dividing the area of the region in which the electrolyte exists (Ya) by the sum of the area of the second region in which the conductive material 50 in the feeder layer 17 is removed (Yb) and the area of the region in which the electrolyte exists (Ya). (Y=Ya/(Ya+Yb)) The region where the electrolyte exists is the first region, and the region other than the first region (the region where the electrolyte does not exist) is the second region. The occupancy (Y) is referred as the existence ratio (%) of electrolyte inside feeder layer.

In addition, the existence ratio (Z) of the catalyst layer 15 in the second region other than the first region inside the feeder layer 17 is a ratio of a region where the catalyst layer 15 exists in the surface of the cross section of the conductive material 50 existing in the region in which the electrolyte does not exist. Specifically, it is a value obtained by, in the second region (D3), dividing a sum of the outer circumferences of the portions where the catalyst layer 15 exists on the surface of the cross section of the conductive material 50 (Za) by the sum of the outer circumferences of the conductive material 50 of the second region (Zb). (Z=Za/Zb) The ratio (Z) is referred as the existence ratio(%) of catalyst layer on surface of conductive material in region in which electrolyte does not exist. The values X, Y, Z are average values, respectively.

In the case of the actual evaluation, as viewed from the upper surface of the feeder layer 17, positions which are 10%, 25%, 40%, and 50% of the length of the feeder layer 17 are cut, and four cross sections are observed by the SEM. The conductive material 50, the catalyst layer 15, and the electrolyte are confirmed and evaluated by the EDX mapping. The above-described parameters are calculated by averaging the values evaluated by sampling the four cross sections.

It should be noted that examples of a processing method for producing a cross section sample of the feeder layer may be milling by argon ions, or microtome processing after resin embedding and the like, but in consideration of the processing damage, it is important that the processed feeder layer becomes close to the state immediately after being pressed without being peeled off from the electrolyte.

### <Electrochemical Cell>

Hereinafter, the electrochemical cell will be described.

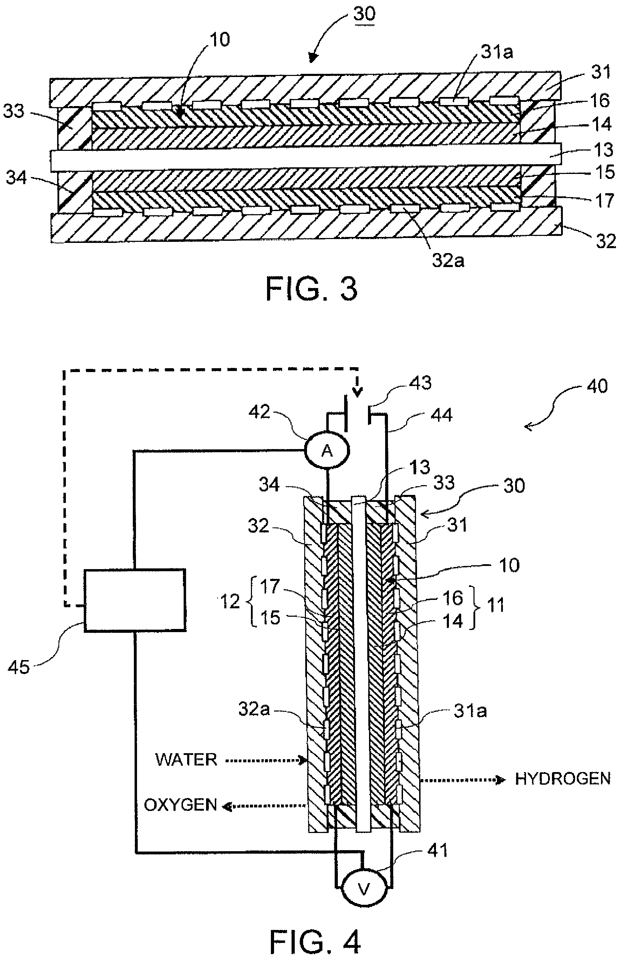

The electrochemical cell (unit cell) 30 illustrated in Fig. 3 has the structure in which the MEA 10 illustrated in Fig. 1 is sandwiched between an anode separator 32 and a cathode separator 31, respectively.

The anode separator 32 and the cathode separator 31 each include channels 31a and 32a for supplying a reactant and a product to the MEA 10. Seal members 33 and 34 are disposed on both side surfaces of the catalyst layers 14 and 15 and the feeder layers 16 and 17, respectively, to prevent a fluid from being leaked from the MEA 10.

The plurality of unit cells 30 are laminated and connected in series to obtain a water electrolysis stack. The shape of the water electrolysis stack is not particularly limited, and is appropriately selected according to a desired voltage or reaction amount. The fuel cell may have a flat disposition structure without being limited to a stack structure. In addition, the number of unit cells included in the fuel cell is also not particularly limited.

As the reactant, for example, an aqueous solution containing at least one selected from the group consisting of water, hydrogen, reformed gas, methanol, ethanol, and formic acid can be used.

The electrochemical cell according to the present embodiment may also be an electrolytic cell or a micro electro mechanical systems (MEMS) type electrochemical cell. For example, the electrolysis cell may have the same configuration as the above-mentioned fuel cell except that the electrolysis cell includes an oxygen generating catalyst electrode as the electrode 11 instead of the anode.

Since the unit cell 30 includes the MEA 10, it is possible to suppress the deterioration in the performance of the unit cell such as a cell voltage for the reasons described above.

### <Electrochemical Device>

Hereinafter, an electrochemical device 40 will be described.

The electrochemical device 40 is, for example, a hydrogen production device.

Fig. 4 illustrates the electrochemical device 40 including the electrochemical cell (unit cell) 30. The electrochemical device 40 further includes a voltage applying unit (power supply) 43, a voltage measuring unit 41, a current measuring unit 42 and a controller 45. Both electrodes of the power supply 43 are electrically connected to the electrode 12 as the anode and the electrode 11 as the cathode.

The controller 45 controls the power supply 43 and applies a voltage to the electrochemical cell 30.

The voltage measuring unit 41 is electrically connected to the electrode 12 as the anode and the electrode 11 as the cathode and measures the voltage applied to the electrochemical cell 30. The measurement information is supplied to the controller 45.

The current measuring unit 42 is inserted into a voltage application circuit for the electrochemical cell 30 and measures a current flowing in the electrochemical cell 30. The measurement information is supplied to the controller 45.

The controller 45 has a memory. In accordance with a program stored in the memory, the controller 45 controls an output of the power supply 43 depending on each measurement information and performs a control to apply a voltage to the electrochemical cell 30 or change a load, and the like.

It should be noted that when the electrochemical cell 30 is used for the battery reaction, a voltage is applied to the electrochemical cell 30. When the electrochemical cell 30 is used for a reaction other than the battery reaction, for example, the generation of hydrogen by water electrolysis and the like, a voltage is applied to the electrochemical cell 30.

The electrochemical device 40 applies a voltage between the electrode 12 as the anode and the electrode 11 as the cathode to progress the electrochemical reaction.

Since the electrochemical device 40 includes the electrochemical cell 30, it is possible to suppress the overvoltage together with reducing the usage amount of the catalyst.

Hereinafter, the operation of the electrochemical cell 30 included in the electrochemical device 40 will be described.

In the case of performing the electrolysis of water, if a voltage is applied from the outside in the electrode 12 as the anode, water is electrolyzed and reacts as the following Formula (1).

2H₂O → O₂ + 4H⁺ + 4e⁻ (1)

Protons (H⁺) generated at this time pass through the electrolyte membrane 13, and electrons (e⁻) reach the electrode 11 as the cathode through an external circuit 44.

In the electrode 11 as the cathode, hydrogen is generated by the following Formula (2).

2H⁺ + 2e⁻ → H₂ (2)

It is possible to produce hydrogen and oxygen by the above Formulas (1) and (2).

### (First Embodiment)

The evaluation of the water electrolysis characteristics is performed using the electrochemical device 40.

### <Production of electrode as cathode>

705 mg of Pt / C (manufactured by Tanaka Kikinzoku Kogyo Co., Ltd) is mixed with 5cc of water and 3mL of 5 wt% solution of Nafion (registered trademark) (manufactured by DuPont Co.). The mixed solution is dispersed by an ultrasonic wave for 30 minutes to produce a suspension. The suspension is sprayed on water-repellent-treated (20 wt%) carbon paper (GDL 25 BC manufactured by CETEK Co., Ltd, thickness of 0.32 mm, area of 235 cm²) and dried. The dried carbon paper is cut in 5 cm × 5 cm, which becomes the electrode 11 as the cathode.

### <Production of electrode as anode>

A titanium non-woven fabric (fiber diameter of 30 µm) having an appropriate thickness and an opening ratio of 40% or a titanium particle sintered body (particle size of 100 µm) having an opening ratio of 85% is used as a base material with 5 cm × 5 cm.
The pressure in the chamber is set to be 1 Pa, and in argon containing 10 % of oxygen, Ir and Ni are sputtered on the feeder layer 17 by a sputtering method to form the catalyst layer 15.

The catalyst layer 15 includes IrO₂ as the catalyst aggregate layer and a void layer. The void layer is produced by RF sputtering of Ni at 500 W for 1000 seconds. After that, the catalyst aggregate layer is produced by RF sputtering of Ni at 200 W and Ir at 200 W for 100 seconds. The sputtering of the void layer and the catalyst aggregate layer is repeated 40 times. Thereafter, they are washed with nitric acid of 3M and pure water to obtain the electrode 12 as the anode. The nitric acid dissolves Ni in the void layer and Ni in the catalyst aggregate layer.

### <Production of MEA>

The MEA 10 is produced by hot-pressing the electrolyte membrane 13 sandwiched between the anode electrode 12 and the cathode electrode 11 at a temperature of 100 °C or higher and 230 °C or lower and at 5 kg/cm² or more and 200 kg/cm² or less. The electrolyte membrane 13 is softened by being hot-pressed at a temperature higher than or equal to the softening point of the electrolyte membrane 13 and penetrates into the inside of the feeder layers 16 and 17 in the electrodes 11 and 12.

Here, for example, Nafion (trademark, manufactured by DuPont Co.) having a thickness of 127 µm, which is the electrolyte membrane 13, is sandwiched between the electrode 12 as the anode and the electrode 11 as the cathode. The Nafion is hot-pressed at a pressure of 1 ton at 120 °C to 230 °C for 3 minutes to produce the MEA 10.

### <Production of Electrochemical Cell>

The MEA 10 is sandwiched between the anode separators 32 and the cathode separator 31, respectively. In addition, the electrochemical cell 30 was produced by disposing the seal members 33 and 34 on both side surfaces of the catalyst layers 14 and 15 and the feeder layers 16 and 17, respectively.

### <Production of Electrochemical Device>

The plurality of electrochemical cells 30 were stacked and connected in series to manufacture the electrochemical device 40.

### <Evaluation of water electrolysis characteristics>

The electrochemical device 40 is operated by applying a voltage between the electrodes of the electrochemical cell 30, that is, between the electrode 12 as the anode and the electrode 11 as the cathode by the power supply 43. By doing so, water is electrolyzed to generate oxygen from the electrode 12 as the anode and generate hydrogen from the electrode 11 as the cathode. At this time, a current density is 2 A/cm², and an operation temperature is 80 °C.

The relationship of the thickness of the feeder layer 17 of the electrode 12 as the anode, the shapes of the conductive material 50 and the catalyst layer 15, the existence ratio (Y) (%) of the electrolyte inside the feeder layer 17, the existence ratio (X) (%) of the catalyst layer 15 on the surface of the cross section of the conductive material 50 in the region in which the electrolyte exists, the existence ratio (Z) (%) of the catalyst layer 15 on the surface of the cross section of the conductive material 50 in the region in which the electrolyte does not exist, the cell voltage (V), and the performance determination, which were confirmed by the SEM-EDX mapping, is shown in the following Table 1.

Here, the performance determination is indicated by "o" when the cell voltage is less than 1.88 V and is indicated by "x" when the cell voltage is higher than or equal to 1.88 V.

It can be seen from the following Table 1 that (a) in the cross section of the feeder layer 17, the electrolyte exists in the first region of 80% or less of the inside of the feeder layer 17, (b) in the first region, 50% or more of the catalyst layer 15 exists on the surface of the cross section of the conductive material 50, and (c) in the second region other than the first region, when the existence ratio of the catalyst layer 15 on the surface of the conductive material 50 is less than or equal to 10%, the cell voltage becomes less than 1.88 V.

Generally, if the electrolyte penetrates into the inside of the feeder layer 17, the contact interface between the electrolyte and the surface of the cross section of the conductive material 50 is increased and the contact resistance is decreased. Since the reaction proceeds at the contact point between the electrolyte and the catalyst layer 15, it is necessary to increase the contact interface between the catalyst layer 15 and the electrolyte as much as possible. If the electrolyte excessively penetrates into the conductive material 50, since the electrolyte membrane 13 prevents the discharge of gas from the feeder layer 17, it is important how much the electrolyte penetrates into the feeder layer 17.

### (Comparative Example 1)

Table 2 shows the analysis results when the shapes of the conductive material and the catalyst layer are the laminated catalyst layer and the single-layered catalyst layer.

It can be seen from the following Table 2 that in both of the laminated catalyst layer and the single-layered contact layer, if each of the existence ratio (%) of the electrolyte inside the feeder layer, the existence ratio (%) of the catalyst layer on the surface of the cross section of the conductive material in the region in which the electrolyte exists, and the existence ratio (%) of the catalyst layer on the surface of the cross section of the conductive material in the region in which the electrolyte does not exist deviates from the above-mentioned range, the performance deteriorates.

On the other hand, as the absolute value of the cell voltage, the laminated catalyst layer is lower than the single-layered catalyst layer by 100 mV or more. It can be seen that the cell voltage can be lowered by forming the laminated catalyst layer.

### (Comparative Example 2)

Table 3 shows the analysis results when the shapes of the conductive material and the catalyst layer are the cases whose catalyst layer 15 is a plated catalyst layer and a coated catalyst layer.

It can be seen from the following Table 3 that the condition that in the cross section of the feeder layer, the electrolyte exists 80% or less of the inside of the feeder layer 17, in the region in which the electrolyte exists, the catalyst layer 15 exists on 50% or more of the surface of the conductive material 50, and in the region in which the electrolyte does not exist, the catalyst layer 15 exists on 10% or less of the surface of the conductive material 50 is not satisfied.

Besides, the shapes of conductive material and catalyst layer are, "Non-woven fabric-Laminated catalyst layer" and "Particle sintered body-Laminated catalyst layer" in Table 1, "Non-woven fabric-Laminated catalyst layer", "Particle sintered body-Laminated catalyst layer" and "Non-woven fabric-Single-layered catalyst layer" in Table 2, and "Non-woven fabric-Plated catalyst layer", "Non-woven fabric-Coated catalyst layer" and "particle sintered body-Coated catalyst layer" in Table 3.

**[Table 1]**

| Thickness (*µ* m) of feeder layer | Shapes of conductive material and catalyst layer | Existence ratio (%) of electrolyte inside feeder layer | Existence ratio (%) of catalyst layer on surface of cross section of conductive material in region in which electrolyte exists | Existence ratio (%) of catalyst layer on surface of conductive material in region in which electrolyte does not exist | Cell voltage (V) | Performance determination |
|---|---|---|---|---|---|---|
| 2000 | Non-woven fabric-Laminated catalyst layer | 1 | 100 | 1 | 1.85 | ○ |
| 2000 | | 2 | 100 | 0 | 1.83 | ○ |
| 200 | | 20 | 100 | 2 | 1.84 | ○ |
| 200 | | 30 | 80 | 0 | 1.80 | ○ |
| 50 | | 75 | 100 | 10 | 1.84 | ○ |
| 50 | | 80 | 100 | 0 | 1.81 | ○ |
| 2000 | Particle sintered body-Laminated catalyst layer | 1 | 100 | 0.5 | 1.85 | ○ |
| 2000 | | 2 | 80 | 0 | 1.83 | ○ |
| 200 | | 10 | 100 | 6 | 1.85 | ○ |
| 200 | | 20 | 80 | 0 | 1.84 | ○ |
| 200 | | 30 | 51 | 0 | 1.83 | ○ |
| 50 | | 50 | 100 | 10 | 1.86 | ○ |
| 50 | | 70 | 87 | 0 | 1.84 | ○ |

**[Table 2]**

| Thickness (*µ*m) of feeder layer | Shapes of conductive material and catalyst layer | Existence ratio (%) of electrolyte inside feeder layer | Existence ratio (%) of catalyst layer on surface of cross section of conductive material in region in which electrolyte exists | Existence ratio (%) of catalyst layer on surface of conductive material in region in which electrolyte does not exist | Cell voltage (V) | Performance determination |
|---|---|---|---|---|---|---|
| 2000 | | 5 | 40 | 0 | 1.99 | × |
| 2000 | | 6 | 33 | 0 | 2.00 | × |
| 2000 | | 7 | 26 | 0 | 2.10 | × |
| 200 | | 10 | 100 | 11 | 1.90 | × |
| 200 | | 40 | 67 | 0 | 1.89 | × |
| 200 | | 50 | 40 | 0 | 1.91 | × |
| 200 | Non-woven | 60 | 33 | 0 | 1.96 | × |
| 200 | fabric-Laminated | 70 | 28 | 0 | 2.00 | × |
| 50 | catalyst layer | 10 | 100 | 80 | 2.10 | × |
| 50 | | 20 | 100 | 74 | 2.00 | × |
| 50 | | 30 | 100 | 70 | 1.95 | × |
| 50 | | 40 | 100 | 66 | 1.93 | × |
| 50 | | 50 | 100 | 60 | 1.91 | × |
| 50 | | 60 | 100 | 50 | 1.89 | × |
| 50 | | 90 | 88 | 0 | 1.89 | × |
| 2000 | Particle sintered body-Laminated catalyst layer | 3 | 50 | 0 | 1.90 | × |
| 2000 | | 4 | 37 | 0 | 1.93 | × |
| 2000 | | 5 | 30 | 0 | 2.00 | × |
| 2000 | | 6 | 25 | 0 | 2.05 | × |
| 2000 | | 7 | 21 | 0 | 2,10 | × |
| 200 | | 40 | 34 | 0 | 1.89 | × |
| 50 | | 10 | 100 | 55 | 2.00 | × |
| 50 | | 20 | 100 | 50 | 1.93 | × |
| 50 | | 30 | 100 | 42 | 1.89 | × |
| 50 | | 90 | 70 | 0 | 1.88 | × |
| 200 | | 10 | 100 | 100 | - | - |
| 200 | | 30 | 100 | 100 | - | - |
| 200 | | 50 | 100 | 100 | - | - |
| 200 | | 70 | 100 | 100 | - | - |
| 200 | Non-woven fabric-Single-layered catalyst layer | 10 | 100 | 11 | 2.20 | × |
| 200 | | 20 | 100 | 2 | 1.98 | - |
| 200 | | 30 | 80 | 0 | 1.93 | - |
| 200 | | 40 | 67 | 0 | 2.00 | - |
| 200 | | 50 | 40 | 0 | 2.05 | - |
| 200 | | 60 | 33 | 0 | 2.08 | - |
| 200 | | 70 | 28 | 0 | 2.10 | - |

**[Table 3]**

| Thickness (*µ*m) of feeder layer | Shapes of conductive material and catalyst layer | Existence ratio (%) of electrolyte inside feeder layer | Existence ratio (%) of catalyst layer on surface of cross section of conductive material in region in which electrolyte exists | Existence ratio (%) of catalyst layer on surface of material in region in which electrolyte does not exist | Cell voltage (V) | Performance determination |
|---|---|---|---|---|---|---|
| 200 | Non-woven fabric-Plated catalyst layer | 10 | 100 | 100 | - | - |
| 200 | | 30 | 100 | 100 | - | - |
| 200 | | 50 | 100 | 100 | - | - |
| 200 | | 70 | 100 | 100 | - | - |
| 200 | Non-woven fabric-Coated catalyst layer | 10 | 47 | 0 | - | - |
| 200 | | 30 | 41 | 0 | - | - |
| 200 | | 50 | 32 | 0 | - | - |
| 200 | | 70 | 25 | 0 | - | - |
| 200 | Particle sintered body-Coated catalyst layer | 10 | 50 | 0 | - | - |
| 200 | | 30 | 45 | 0 | - | - |
| 200 | | 50 | 43 | 0 | - | - |
| 200 | | 70 | 38 | 0 | - | - |

According to the embodiments, a membrane electrode assembly, an electrochemical cell, and an electrochemical device capable of suppressing an increase in overvoltage is provided.

The existence ratio (Y) of the electrolyte in the feeder layer 17 is preferable to be less than or equal to 80%. Although there is not a lower limit, it may be 1% or more, or 4% or more. That is, the electrolyte is preferable to be less than or equal to 80% of the thickness of the feeder layer, and though there is not a lower limit, it may be 1% or more, or 4% or more. The existence ratio (X) of the catalyst layer 15 on the surface of the cross section of the conductive material 50 in the region in which the catalyst exists is preferable to be 50% or more. If desired, it may be a value of more than 50%, or more than 70%. The existence ratio (Z) of the catalyst layer 15 on the surface of the cross section of the conductive material 50 in the region in which the catalyst is not present is preferable to be 10% or less.

Further, in the embodiments, the catalyst layer may be a laminated structure including an aggregate layer and a void layer. The thickness of the aggregate layer may be 4 nm or more and 30 nm or less. A porosity of the feeder layer may be 40% or more and 90% or less. The feeder layer may be made of a metal non-woven fabric having a fiber length of 1µm or more and 100µm or less. The feeder layer may be made of a metal sintered body of particles of 1 µm or more and 100 µm or less. The thickness of the feeder layer may be 50 µm or more and 2000 µm or less.

While several embodiments of the present invention have been described, these embodiments have been presented by way of example and are not intended to limit the scope of the invention. These embodiments can be practiced in other various forms, and various omissions, substitutions, and changes can be made without departing from the gist of the invention. These embodiments or modified examples thereof are included in the scope or gist of the invention as well as the invention described in the claims and the equivalent scope thereof.

## Claims

1. A membrane electrode assembly, comprising:
a pair of electrodes, each having a feeder layer that is porous and made of a conductive material; and
an electrolyte membrane disposed between the pair of electrodes,
wherein at least one of the electrodes has a catalyst layer disposed in the feeder layer, and, in a cross section of the feeder layer,
an electrolyte exists in a first region less than or equal to 80% of a thickness of the feeder layer from the electrolyte membrane toward an opposite direction to the electrolyte membrane,
the catalyst layer exists at 50% or more of an outer circumference of a cross section of the conductive material in the first region, and
the catalyst layer exists at 10% or less of the outer circumference of the cross section of the conductive material in a second region other than the first region.

2. The membrane electrode assembly according to claim 1, wherein the catalyst layer is a laminated structure including an aggregate layer and a void layer.

3. The membrane electrode assembly according to claim 2, wherein a thickness of the aggregate layer is 4 nm or more and 30 nm or less.

4. The membrane electrode assembly according to any one of claims 1 to 3, wherein a porosity of the feeder layer is 40% or more and 90% or less.

5. The membrane electrode assembly according to any one of claims 1 to 4, wherein the feeder layer is made of a metal non-woven fabric having a fiber length of 1µm or more and 100µm or less.

6. The membrane electrode assembly according to any one of claims 1 to 5, wherein the feeder layer is made of a metal sintered body of particles of 1 µm or more and 100 µm or less.

7. The membrane electrode assembly according to any one of claims 1 to 6, wherein the thickness of the feeder layer is 50 µm or more and 2000 µm or less.

8. An electrochemical cell, comprising:
a membrane electrode assembly according to any one of claims 1 to 7; and
a pair of separators having the membrane electrode assembly sandwiched therebetween.

9. An electrochemical device comprising the electrochemical cell according to claim 8.

10. The electrochemical device of claim 9, wherein the electrochemical device is a hydrogen production device.
